# EUROPEAN PATENT APPLICATION

(11) **EP 1 745 943 A1**
(43) Date of publication of application: **24.01.2007**
(21) Application number: 05106583.7
(22) Date of filing: 19.07.2005
(51) Int. Cl.: B60B 21/06, B60B 1/04

(54) **Wire wheel with improved wire mounting**

(71) Applicant: Rigida International BV, 5831 AC Boxmeer (NL)
(72) Inventor: Van Boekel, Willie, 5453 JT Langenboom (NL)
(74) Representative: Leherte, Georges M.L.M.

(57) **Abstract**

The invention provides wire wheels or spoke wheels (1) comprising wheel spokes (3) provided with through holes (8) over the periphery of a wheel rim (2) and retained in the wheel rim by means of spoke nipples (9) attached to one end of the wheel spokes, whereas the wheel spokes are connected at their other end to a central wheel hub (4), wherein the axis of the holes in the wheel rim shows an angle with respect to the radial direction of the wheel rim.
The invention also provides a method for producing such wheels.

## Description

The invention relates to wire wheels or spoke wheels as commonly used for bicycles and light motorcycles, more particularly to such wheels involving an aluminium wheel rim.

Such aluminium wheels are produced from aluminium profiles by "spiralising" the profile and locking the profile into a circle (the wheel rim), for instance by means of pins squeezed into appropriate bores of the profile or by gluing or welding the joint.
As a consequence of a general trend towards wheels with larger central wheel hubs the direction of the wheel wires or spokes tends to deviate from the actual radial direction. The spoke holes in the wheel rim are however bored towards the centre of the wheel hub. This results in an inaesthetic and even dangerous kink or bend in the wheel wire or spoke near the nipple retaining the wheel wire or spoke in the bore of the wheel rim.

The objective of the present invention is to avoid this drawback and to achieve an optimal spoke / nipple-line.

The invention therefor provides a wire wheel or spoke wheel comprising wheel wires / wheel spokes provided through holes / bores over the periphery of a wheel rim and retained in the wheel rim by means of spoke nipples attached to one end of the wheel wires / wheel spokes, whereas the wheel wires / wheel spokes are connected at their other end to a central wheel hub, wherein the axis of the holes / bores in the wheel rim shows an angle with respect to the radial direction of the wheel rim (i.e. the direction perpendicular to the wheel rim circle).
The expression "angle with respect to the radial direction" must be understood as an angle in the wheel circle plane (a rearward or forward angle in "longitudinal" direction) as well as in "axial" direction (a left or right angle in lateral direction).
Thanks to this special construction the spoke / nipple line can direct itself to its desired position on the wheel hub, thus avoiding the above mentioned bend.
According to a further feature of the invention the axis of the holes / bores in the wheel rim is more specifically directed along a line connecting the center of the bore and the connection point of the wheel wire / wheel spoke on the wheel hub.

According to a preferred embodiment of the invention the wheel rim is made of an aluminium profile.
According to a further preferred embodiment of the invention the inner profile of the wheel rim may more particularly comprise a thick or thickened bottom or a reinforced strip on said bottom, through which extend the holes / bores for the wheel wires / wheel spokes.
The expression "the bottom of the inner profile of the wheel rim" thereby refers to the "tire-side" of the wheel

According to preferred feature of these specific embodiments of the invention, the holes / bores for the wheel wires / wheel spokes may also comprise a dimpled upper hole portion.
The expression "dimpled upper hole portion" in this context refers to a excavated part on the "tire-side" in the reinforced strip of the wheel rim.

According to still another preferred feature of these specific embodiments of the invention, the spoke nipples may comprise a beveled or rounded nipple head provided to cooperate with the dimpled upper hole portion in order to assist to the proper inclination of the wheel wire / wheel spoke.

In a preferred embodiment of the wire wheel / spoke wheel according the invention, the axis of the holes / bores in the wheel rim shows a left or right angle and a rearward or forward angle with respect to the radial direction of the wheel rim, most appropriately in an alternating way in accordance with the usual disposition of the wires / spokes in wire wheels / spoke wheels.

The advantages resulting from the new wire wheel / spoke wheel construction according to the invention are, in particular :
a considerably reduced risk of breakage ;
less difference in the spoke tension of a used wheel as compared to a new wheel ;
there will be less need for the so called "cracking" of the wheel, well known in the art ;
due to the fact that the spoke bores (in which the spoke nipple is put) is provided into the proper direction, the nipple will not clamp or lock in the hole during the "tightening" of the wheel, so that a more progressive tension build can be achieved ;
due to the proposed shape of the hole the nipple will always lie in proper contact with the hole rim.

The invention also specifically relates to a method for manufacturing wire wheels / spoke wheels offering these advantages.
This method according to the invention, by putting wheel wires / wheel spokes through bores provided over the periphery of a wheel rim, whereas the wheel wires / wheel spokes are retained in the wheel rim by means of spoke nipples attached to one end of the wheel rims / wheel spokes, and whereas the wheel wires / wheel spokes are connected at their other end to a central wheel hub, involves producing the bores in the wheel rim according to an axis making an angle with respect to the radial direction of the wheel rim.

According to a preferred feature of the invention the bores are produced according to an axis connecting the center of the bore towards the connection point of the wheel wire / wheel spoke on the wheel hub.

According to a preferred embodiment of the invention the involves producing the wheel rim from an aluminium profile comprising a thickened / reinforced strip in its inner bottom, whereas the holes for the wheel wires / wheel spokes are bored through said reinforced strip of aluminium profile.

According to further feature of the invention, the holes / bores for the wheel wires / wheel spokes may appropriately be provided with a dimpled upper hole portion, whereas according to still a further feature the spoke nipples may be provided with a beveled or rounded nipple head cooperating with the dimpled upper hole portion so as to assist the proper inclination of the wheel wire / wheel spoke.

In a preferred embodiment of the method according to the invention, the bores in the wheel rim are produced according to an axis making a left or right angle and a rearward or forward angle with respect to the radial direction of the wheel rim.

Further features of the invention will become apparent from the following detailed description of a preferred embodiment of a spoke wheel according to the invention.
Reference is made in this description to the enclosed drawings, in which :
- Figure 1: shows a side plan view, partially in section with broken away parts, and
- Figure 2: shows a front plan view, partially in section with broken away parts,
of a wire wheel / spoke wheel according to one embodiment of the invention
- Figure 3A and Figure 3B: show enlarged detail views of the wire wheel / spoke wheel shown in figure 1 and 2.

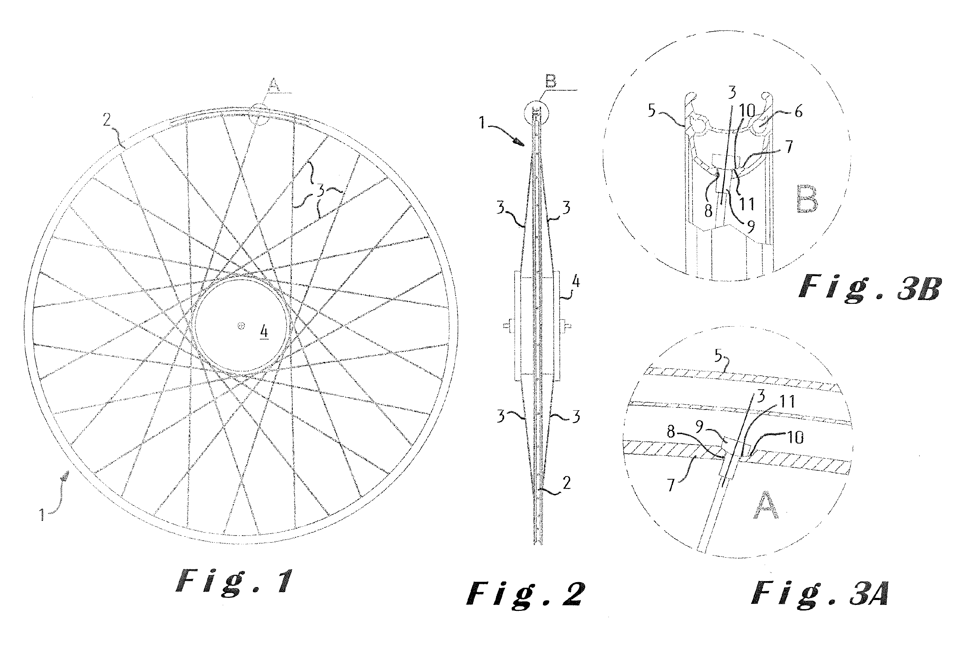

The wire wheel / spoke wheel, indicated as a whole with reference 1 in figures 1 and 2, comprises a wheel rim 2, wheel wires or spokes 3 and a (relatively large) wheel hub 4 ; the essential difference of the wheel according to the invention as represented in figures 1 and 2 which may be apparent on close inspection of these figures, as compared to a conventional wheel according to the state of the art, is the absence of a kink or bend in the spoke near the wheel rim.
As more clearly perceivable in figure 3B the wheel rim consists of a piece of extruded aluminium profile 5, "spiralised" into a circle, retained in its circular form by means of pins (not represented) squeezed in ad hoc holes 6 in the profile or by a glued or welded joint (not represented) at the contacting ends of the spiralised profile.
The profile 5 comprises a thickened / reinforced strip 7 through which extend bores 8 for the spokes 3 and the spoke nipples 9.
The bores 8 have their axis directed in an angle deviating from the radial direction of the wheel rim (i.e. the direction perpendicular to the wheel circle). As can be seen on figures 3A and 3b the bore is deviating from the radial direction both in a lateral direction with respect to the plane of the wheel (to the left in figure 3B) and away from the wheel centre in the plane of the wheel (to the left in figure 2B). Consecutive bores will be deviating from the radial direction, in alternating way, to the left and to the right and forward and rearward.
As visible in figure 1, the axes of the bores 8 point in such direction that the spokes reach the outer circle of the wheel hub in a substantially tangential way. The actual direction of the spokes 3 and the bores 8 is therefore depending on the size of the wheel hub 4.

On the inner side of the wheel (the "tire-side") the bores 8 comprise an upper portion in the form of a dimpled hole 10 in the thickened profile bottom 7. Hence the importance of this thickened / reinforced bottom 7 of the profile 5.
The spoke nipples comprise a bevelled or rounded nipple head bottom 11 (figures 3A and 3B show a rounded nipple head bottom 11). The dimpled hole shape of the upper portion of the bore 8 and the bevelled or rounded nipple head bottom 11 together provide the required freedom of movement of the nipple 9 to ensure the proper inclination of the spoke without giving rise to "clamping" or "locking" of the nipple 9 in the hole / bore 8.

While the invention has been disclosed in detail with reference to one specific embodiment, it is stressed that the invention is not limited to specific details given foe that embodiment and that many variants and modifications will be apparent to those skilled In the art without departing from the invention as set out in the above general disclosure and the attached claims.

## Claims

1. Wire wheel or spoke wheel comprising wheel wires / wheel spokes provided through holes / bores over the periphery of a wheel rim and retained in the wheel rim by means of spoke nipples attached to one end of the wheel wires / wheel spokes, whereas the wheel wires / wheel spokes are connected at their other end to a central wheel hub, **characterized in that** the axis of the holes / bores in the wheel rim shows an angle with respect to the radial direction of the wheel rim.

2. Wire wheel / spoke wheel according to claim 1, **characterized in that** the axis of the holes / bores in the wheel rim is directed along a line connecting the center of the bore and the connection point of the wheel wire / wheel spoke on the wheel hub.

3. Wire wheel / spoke wheel according to any one of the preceding claims, **characterized in that** the wheel rim is made of an aluminium profile.

4. Wire wheel / spoke wheel according to claim 3, **characterized in that** the bottom of the inner profile of the wheel rim comprises a thickened / reinforced strip through which extend the holes / bores for the wheel wires / wheel spokes.

5. Wire wheel / spoke wheel according to claim 4, **characterized in that** the holes / bores for the wheel wires / wheel spokes comprise a dimpled upper hole portion.

6. Wire wheel / spoke wheel according to claim 5, **characterized in that** the spoke nipples comprise a beveled or rounded nipple head provided to cooperate with the dimpled upper hole portion in order to assist to the proper inclination of the wheel wire / wheel spoke.

7. Wire wheel / spoke wheel according to any one of the preceding claims, **characterized in that** the axis of the holes / bores in the wheel rim shows a left or right angle and a rearward or forward angle with respect to the radial direction of the wheel rim.

8. Method for manufacturing wire wheels / spoke wheels by putting wheel wires / wheel spokes through bores provided over the periphery of a wheel rim, whereas the wheel wires / wheel spokes are retained in the wheel rim by means of spoke nipples attached to one end of the wheel rims / wheel spokes, and whereas the wheel wires / wheel spokes are connected at their other end to a central wheel hub, **characterized in that** the bores in the wheel rim are produced according to an axis making an angle with respect to the radial direction of the wheel rim.

9. Method according to claim 8, **characterized in that** the bores are produced according to an axis connecting the center of the bore towards the connection point of the wheel wire / wheel spoke on the wheel hub.

10. Method according to any one of claims 8 and 9, **characterized in that** the wheel rim is produced from an aluminium profile comprising a thickened / reinforced strip in its inner bottom, whereas the holes for the wheel wires / wheel spokes are bored through said reinforced strip of aluminium profile.

11. Method according to claim 10, **characterized in that** the holes / bores for the wheel wires / wheel spokes are provided with a dimpled upper hole portion.

12. Method according to claim 11, **characterized in that** the spoke nipples are provided with a beveled or rounded nipple head cooperating with the dimpled upper hole portion so as to assist the proper inclination of the wheel wire / wheel spoke.

13. Method according to any one of claims 8 to 12, **characterized in that** the bores in the wheel rim are produced according to an axis making a left or right angle and a rearward or forward angle with respect to the radial direction of the wheel rim.
